# EUROPÄISCHE PATENTSCHRIFT

(11) **EP 3 126 182 B1**
(45) Veröffentlichungstag und Bekanntmachung des Hinweises auf die Patenterteilung: **28.11.2018**
(21) Anmeldenummer: 15713439.6
(22) Anmeldetag: 26.03.2015
(51) Int. Cl.: B60L 11/18, H02J 7/34, B60L 3/00, B60L 3/04, H02M 3/335, H02M 3/158, H02J 1/10, H02M 1/32

(54) **SCHALTUNGSANORDNUNG ZUR ELEKTRISCHEN ANBINDUNG ZUMINDEST EINER BRENNSTOFFZELLENANLAGE UND ZUMINDEST EINER WIEDERAUFLADBAREN BATTERIE AN EIN FAHRNETZ EINES UNTERWASSERFAHRZEUGS**
CIRCUIT ARRANGEMENT FOR ELECTRICALLY CONNECTING AT LEAST ONE FUEL CELL SYSTEM AND AT LEAST ONE RECHARGEABLE BATTERY TO A PROPULSION NETWORK OF AN UNDERWATER VEHICLE
CIRCUIT POUR RELIER ÉLECTRIQUEMENT AU MOINS UN SYSTÈME DE PILE À COMBUSTIBLE ET AU MOINS UNE BATTERIE RECHARGEABLE AU RÉSEAU DE PROPULSION D'UN ENGIN SOUS-MARIN

(30) Priorität: 31.03.2014 DE 102014205977
(43) Veröffentlichungstag der Anmeldung: 08.02.2017
(73) Patentinhaber: ThyssenKrupp Marine Systems GmbH, 24143 Kiel (DE)
(72) Erfinder: KIELMANN, Torben, 24111 Kiel (DE); DANNENBERG, Norbert, 23628 Krummesse (DE)
(74) Vertreter: thyssenkrupp Intellectual Property GmbH
(86) Internationale Anmeldenummer: PCT/EP2015/056564
(87) Internationale Veröffentlichungsnummer: WO 2015/150219

(56) Entgegenhaltungen:
- DE-A1- 10 235 431
- US-A1- 2011 084 648
- US-A1- 2012 019 190
- US-B1- 6 369 461

## Beschreibung

Die Erfindung betrifft eine Schaltungsanordnung zur elektrischen Anbindung zumindest einer Brennstoffzellenanlage und zumindest einer wiederaufladbaren Batterie an ein Fahrnetz eines Unterwasserfahrzeugs gemäß dem Oberbegriff des Anspruchs 1 sowie ein Verfahren zum Betreiben einer außenluftunabhängigen Antriebs- und Energieversorgung eines Unterwasserfahrzeugs gemäß dem Oberbegriff des Anspruchs 7.

Auf aus dem Stand der Technik bekannten mit Brennstoffzellenanlage ausgestatteten Unterwasserfahrzeugen werden zwei unterschiedliche Arten der elektrischen Anbindung der Brennstoffzellenanlage mit Brennstoffzellenmodulen an die Fahranlage implementiert: Zum einen ist dies die Anbindung der Brennstoffzellenmodule direkt an die Hauptfahrschiene mit einer Entkoppelung der Batterieladeströme mittels einer einen mechanischen Schalter überbrückbaren Diode. Dies hat zwar den Vorteil, dass keine zusätzlichen Verluste durch einen DC-DC-Wandler auftreten und dass keine weiteren zusätzlichen Einrichtungen nötig sind, jedoch zieht diese Art der Anbindung auch eine ganze Reihe von Nachteilen nach. Beispielsweise muss es sich in diesem Fall um eine hochdynamische Brennstoffzellenanlage handeln, was jedoch einen optimalen Reformerbetrieb verhindert. Weiterhin können sich große dynamische Lastschwankungen lebensdauerverkürzend auf die Brennstoffzellenmodule auswirken. Bei leistungsbegrenzenden Störungen muss die Brennstoffzellenanlage bzw. der Brennstoffzellenstrang vom Netz genommen werden, woraus eine verminderte Zuverlässigkeit resultiert. Darüber hinaus ist die Entwurfsflexibilität eingeschränkt und bei Ladebetrieb der Batterien, oder wenn Energie aus der Batterie zusätzlich zu der von der Brennstoffzellenanlage bereitgestellten Energie entnommen wird, ergibt sich eine "starre" Spannungslage und somit eine "starre" Belastung der Brennstoffzelle. Auch ist eine Kannlastbildung nicht möglich. Moderne Brennstoffzellenanlagen werden jedoch in der Regel nach dem Prinzip der Kannlastbildung betrieben. Dabei wird aus den Lastanforderungen der elektrischen Energiesenke eine Lastanforderung für die Brennstoffzellenanlage generiert und als gewünschter Sollwert an selbige geschickt. Die Brennstoffzellenanlage generiert aus internen Betriebsparametern eine Kannlast, die von der elektrischen Energiesenke nicht überschritten werden darf. Diese Kannlast kann im einfachsten Fall eine Anstiegsrampe sein, sie kann aber auch neben brennstoffzelleninternen Parametern, wie z. B. Wasserstoffdruck, (Luft-)sauerstoffdruck, diverse Temperaturen, Spannungen, Ströme, etc., beispielsweise auch den einen begrenzenden Wert für die Reformeranlage enthalten.

Die Kannlast verhindert ein Abschalten der Brennstoffzellen bzw. Reformeranlage. Die fehlende elektrische Energie muss bei Unterdeckung der Energiesenken aus der oder den Batterien oder dem oder den Generatoren ausgeglichen werden, um die Stabilität des Netzes zu erhalten.

Zum anderen ist dies die Anbindung der Brennstoffzellenmodule über einen DC-DC-Wandler an die Hauptfahrschiene. Eine derartige Konfiguration ist beispielsweise aus EP 1 568 601 A1 bekannt, in welcher ein Unterseeboot mit einer außenluftunabhängigen Antriebs- und Energieversorgung eines Elektromotors und eines Fahrantriebs beschrieben ist, die aus einer Brennstoffanlage und einer wiederaufladbaren Batterie besteht. Die Brennstoffzellenanlage ist hier über einen DC-DC-Steller parallel zum Ausgang der Batterie geschaltet. Vorteilhaft ist hierbei, dass keine besonderen Anforderungen an die Dynamik der Brennstoffzellenanlage notwendig sind und somit ein optimaler Reformierbetrieb realisierbar ist. Auch werden eine Kannlastbildung und eine hohe Entwurfsflexibilität ermöglicht. Nachteilig ist jedoch, dass zusätzliche Verluste durch den DC-DC-Steller entstehen und dass kein Notbetrieb bei einem Ausfall des DC-DC-Stellers möglich ist.

Eine weitere Variante wird in EP 2 112 707 A1 für ein Verfahren zur Energieversorgung eines Unterseebootes beschrieben. Hierbei wird ein Stromnetz mittels einer Brennstoffzelle mit Energie versorgt, welche durch einen Reformer gespeist wird. Ein elektrischer Speicher - eine Pufferbatterie - nimmt Leistung aus der Brennstoffzelle auf, wenn die Leistung der Brennstoffzelle die Netzlast übersteigt, und gibt Leistung ab, wenn die Leistung der Brennstoffzelle die Netzlast unterschreitet. Der Einsatz einer Pufferbatterie weist jedoch ebenfalls Nachteile auf. So muss beispielsweise der DC-DC-Wandler einschließlich der Pufferbatterie auf die Nennleistung des Fahrnetzes ausgelegt werden, wenn ein unterbrechungsfreier Betrieb möglich sein soll. Soll diese Überdimensionierung verhindert werden, muss bei Lastsprüngen in Bereiche, die größer als die Nennleistung der Brennstoffzellenanlage sind, die Brennstoffzellenanlage vom Netz getrennt werden und die gesamte Last der Brennstoffzelle in der Pufferbatterie zwischen gespeichert werden. Ein erneutes Zuschalten kann erst nach Synchronisation der Belastung der Brennstoffzelle auf die Batterie erfolgen. Auch bestehen aus dem Stand der Technik bekannte elektrische Unterwasser-Bootsfahranlagen idealerweise aus zwei oder mehr Teilnetzen, wobei jedes dieser Teilnetze von mindestens einer Teilbatterie gespeist wird. Dies ist zum einen aus Verfügbarkeitsgründen notwendig, denn so stehen beispielsweise bei einem Kurzschluss in einem Teilnetz die anderen Teilnetze weiterhin zur Verfügung. Zum anderen ist dies notwendig bei Fahranlagen mit Gleichstrompropellermotoren, um eine grobe Einstellung der Drehzahl im Ankerstellbereich durch Kombinieren von Reihen- und Parallelschaltung der Teilbatterien vornehmen zu können.

Bei den aus dem Stand der Technik bekannten Lösungen weist der DC-DC-Wandler einen Leistungsausgang auf, der bestenfalls über mechanische Leistungsschalter in alle Teilnetze speist. Ein unterbrechungsfreier Betrieb der Brennstoffzellenanlage ist damit nicht immer möglich. Dies gilt insbesondere für Anlagen mit Gleichstrompropellermotoren, wo Teilbatterien für das Erreichen hoher Vortriebsgeschwindigkeiten in Reihe geschaltet werden.

Aufgrund der großen Ausgangsspannung musste der DC-DC-Wandler hier bisher abgeschaltet werden. Überschüssiger Wasserstoff kann somit nicht mehr durch die Brennstoffzelle umgesetzt werden. Dies ist insbesondere bei Wasserstofferzeugung mit Reformern äußerst problematisch. Aus der DE 10 2006 056 888 A1 wird eine DC-DC-Wandleranordnung zur Verschaltung einer Brennstoffzellenvorrichtung mit einer Energiespeichervorrichtung vorgeschlagen.

Aus der DE 11 2008 000 423 T5 offenbart eine Schaltungskonfiguration, gemäß welcher ein DC-DC-Wandler zwischen einer Batterie und einer Brennstoffzelle angeordnet ist.

Aus der US 6,369,461 A1 ist eine Schaltungsanordnung bekannt zur Energieversorgung einer Last durch eine Brennstoffzelle und hilfsweise durch eine Batterie.

In Anbetracht der aus dem Stand der Technik bekannten Konfigurationen ist es daher eine Aufgabe der vorliegenden Erfindung, eine Schaltungsanordnung zur elektrischen Anbindung zumindest einer Brennstoffzellenanlage an ein Versorgungsnetz insbesondere eines Unterwasserfahrzeugs und ein entsprechen des Verfahren zum Betreiben eines elektrischen Versorgungsnetzes insbesondere eines Unterwasserfahrzeugs bereitzustellen, mittels welcher die oben beschriebenen Probleme des Standes der Technik zumindest teilweise überwunden werden.

Diese Aufgabe wird durch eine Schaltungsanordnung mit den Merkmalen des Anspruchs 1 sowie durch ein Verfahren zum Betreiben einer außenluftunabhängigen Antriebs- und Energieversorgung eines Unterwasserfahrzeugs mit den Merkmalen des Anspruchs 8 gelöst. Vorteilhafte Weiterbildungen der Erfindung sind in den Unteransprüchen und der nachfolgenden Beschreibung sowie der Zeichnung angegeben. Hierbei können die in den Unteransprüchen und der Beschreibung angegebenen Merkmale jeweils für sich, aber auch in geeigneter Kombination die erfindungsgemäße Lösung gemäß Anspruch 1 bzw. Anspruch 7 ausgestalten. Erfindungsgemäß wird somit eine Schaltungsanordnung zur elektrischen Anbindung zumindest einer Brennstoffzellenanlage und zumindest einer wiederaufladbaren Batterie an ein Verbrauchernetz, insbesondere ein Fahrnetz eines Unterwasserfahrzeugs mit einer außenluftunabhängigen Antriebs- und Energieversorgung bereitgestellt, wobei zumindest ein DC-DC-Wandler vorgesehen ist, welcher mit der Brennstoffzellenanlage einerseits und der zumindest einen Batterie andererseits verbindbar ist, wobei der zumindest eine DC-DC-Wandler dazu ausgelegt ist, in zwei Richtungen wirken zu können. Mittels der erfindungsgemäßen Schaltungsanordnung wird einerseits eine Kannlastbildung ermöglicht, andererseits wird gleichzeitig eine zusätzliche Pufferbatterie eingespart; diese Aufgabe wird von der zumindest einen wiederaufladbaren Batterie übernommen. Zudem kann jederzeit ein unterbrechungsfreier Betrieb gewährleistet werden.

Mit einem Halbleiterschalter kann die Brennstoffzellenanlage direkt mit dem Fahrnetz verbunden werden. Hierdurch ist ein direkter Stromfluss von der Brennstoffzellenanlage in die elektrische Fahranlage möglich. Der Halbleiterschalter ermöglicht es insbesondere, je nach Lastbedarf und Konfiguration der Batterie die direkte Anbindung an das Fahrnetz zu unterbrechen und wieder herzustellen. Zur Glättung des aus den Brennstoffzellen fließenden Stromes kann zusätzlich eine Induktivität vorgesehen sein.

Besonders vorteilhaft ist, dass sowohl die Brennstoffzellenanlage als auch die wiederaufladbare Batterie direkt und ohne Umspannung mit dem Verbrauchernetz, insbesondere dem Fahrnetz, verbunden werden können bzw. an dieses anschließbar sind. Somit entstehen bei der Versorgung des Verbrauchernetzes, insbesondere des Fahrnetzes, ausschließlich aus der Brennstoffzellenanlage oder bei der Versorgung des Verbrauchernetzes, insbesondere des Fahrnetzes, ausschließlich aus der wiederaufladbaren Batterie keine Verluste durch einen DC-DC-Wandler. Hierbei ist es optional zusätzlich möglich, wenn einer der beiden Energieversorger Brennstoffzellenanlage oder wiederaufladbare Batterie direkt mit dem Verbrauchernetz, insbesondere dem Fahrnetz, verbunden ist, dass zusätzlich der andere der beiden Energieversorger über einen DC-DC-Wandler ebenfalls mit dem Verbrauchernetz, insbesondere dem Fahrnetz, verbunden werden kann.

In einer weiteren Ausführungsform der Erfindung sind die Brennstoffzellenanlage und die zumindest eine wiederaufladbare Batterie direkt an ein Verbrauchernetz anschließbar.

In einer weiteren Ausführungsform der Erfindung sind die Brennstoffzellenanlage über ein erstes Schaltmittel und die zumindest eine wiederaufladbare Batterie über ein zweites Schaltmittel direkt an ein Verbrauchernetz anschließbar. Als erstes und zweites Schaltmittel können jede Art von Schaltern verwendet werden, beispielsweise mechanische Schalter oder Halbleiterschalter. Erfindungsgemäß ist der zumindest eine DC-DC-Wandler dazu ausgelegt, in der einen Richtung als Tiefsetzsteller zu wirken, so dass Energie von der Brennstoffzelle in das Fahrnetz transferiert werden kann.

Weiterhin ist der zumindest eine DC-DC-Wandler vorzugsweise ausgelegt, in der anderen Richtung als Hochsetzsteller zu wirken, so dass Energie von der Batterie in Richtung Brennstoffzellenanlage transferiert werden kann. Ein Stromfluss in die Brennstoffzellenanlage ist durch geeignete regelungstechnische Maßnahmen zu verhindern.

Somit kann der zumindest eine DC-DC-Wandler im sogenannten Stützbetrieb, d. h. wenn der Halbleiterschalter durchgeschaltet ist, in beiden Energieflussrichtungen arbeiten. Wenn er als Hochsetzsteller arbeitet, wird dabei der Strom in der Brennstoffzellenanlage ergänzt und die Spannung der Brennstoffzelle kann stabil gehalten werden. Wenn er als Tiefsetzsteller arbeitet, werden die Brennstoffzellen der Brennstoffzellenanlage stärker belastet, beispielsweise, um überschüssigen Wasserstoff zu verwerten.

Ferner können Schaltmittel vorgesehen sein, die so wirken, dass Energie von der Brennstoffzellenanlage in die zumindest eine Batterie zum Aufladen transferiert werden kann.

Es ist darüber hinaus vorteilhaft, wenn eine Anzahl von parallel geschalteten DC-DC-Wandlern vorgesehen ist, welche insbesondere zur Wirkungsoptimierung im Teillastbereich, beispielsweise zur Minimierung von Schaltverlusten, lastabhängig einzeln zu- und abschaltbar sind.

Gemäß einer weiteren bevorzugten Ausführungsform weist die Brennstoffzellenanlage eine Brennstoffzelle oder mehrere in Reihe geschaltete Brennstoffzellen auf, welche jeweils aus einem oder mehreren in Reihe geschalteten Brennstoffzellen-Modulen bestehen.

In einer weiteren bevorzugten Ausführungsform weist die Brennstoffzellenanlage eine Brennstoffzelle oder mehrere in Reihe geschaltete Brennstoffzellen auf, welche jeweils aus einem oder mehreren in Reihe geschalteten Brennstoffzellen-Modulen bestehen und wobei eine Anzahl von parallel geschalteten DC-DC-Wandlern vorgesehen ist, welche insbesondere zur Wirkungsoptimierung im Teillastbereich, beispielsweise zur Minimierung von Schaltverlusten, lastabhängig einzeln zu- und abschaltbar sind, wobei jedem Brennstoffzellen-Modul ein parallel geschalteter DC-DC-Wandler zugeordnet ist.

Insbesondere kann dabei vorgesehen sein, dass bei von Null aus steigender Last zunächst ein erster der parallel geschalteten DC-DC-Wandlern zugeschaltet wird, während die weiteren parallel geschalteten DC-DC-Wandler abgeschaltet sind und bei Überschreiten der Auslastung des ersten parallel geschalteten DC-DC-Wandlers über einen Auslastungsgrenzwert hinaus mindestens ein weiterer der parallel geschalteten DC-DC-Wandler zugeschaltet wird. Der Auslastungsgrenzwert liegt vorzugsweise im Bereich von 50% bis 100% der Nennlast, weiter vorzugsweise im Bereich von 75% bis 100% der Nennlast oder besonders bevorzugt im Bereich von 90% bis 100% der Nennlast.

Vorzugsweise ist der zumindest eine DC-DC-Wandler ein Synchronwandler, oder ein Vollbrückenwandler, welcher den Energiefluss von der Brennstoffzellenanlage in die Batterie sicherstellt.

Erfindungsgemäß wird weiterhin ein Verfahren zum Betreiben einer außenluftunabhängigen Antriebs- und Energieversorgung eines Unterwasserfahrzeugs bereitgestellt, welche durch einen Stromkreislauf mit zumindest einer wiederaufladbaren Batterie und zumindest einer Brennstoffzellenanlage versorgt wird, wobei in dem Stromkreislauf zumindest ein bidirektionaler DC-DC-Wandler vorgesehen ist, welcher mit der Brennstoffzellenanlage einerseits und der zumindest einen Batterie andererseits verbindbar ist, und zumindest ein Halbleiterschalter zum Unterbrechen der direkten Einspeisung durch die zumindest eine Brennstoffzellenanlage in das Verbrauchernetz, wobei wenn der Halbleiterschalter sperrt, ein Energiefluss durch den zumindest einen DC-DC-Wandler von der zu mindest einen Brennstoffzellenanlage zu einem durch die Antriebs- und Energieversorgung versorgten Verbrauchernetz, insbesondere zu einem Fahrnetz, erfolgt, wobei die Verbrauchernetzspannung von der zumindest einen Batterie bestimmt wird. Wenn der Halbleiterschalter durchgeschaltet ist, und wobei vorgesehen sein kann, dass ein weiterer Halbleiterschalter zwischen der zumindest einen Batterie und dem Verbrauchernetz geöffnet wird, erfolgt ein Energiefluss in Abhängigkeit des Auslastungszustandes der Brennstoffzelle durch den zumindest einen DC-DC-Wandler. Ist die im aktuell vorliegenden Betriebspunkt der mindestens einen Brennstoffzellenanlage verfügbare Leistung größer als die vom Verbrauchernetz abgeforderte Leistung erfolgt ein Energiefluss durch den zumindest einen DC-DC-Wandler von der zumindest einen Brennstoffzellenanlage zu der zumindest einen Batterie. Ist die im aktuell vorliegenden Betriebspunkt der mindestens einen Brennstoffzellenanlage verfügbare Leistung kleiner als die vom Verbrauchernetz abgeforderte Leistung erfolgt ein Energiefluss durch den zumindest einen DC-DC-Wandler von der zumindest einen Batterie zu der zumindest einen Brennstoffzellenanlage. In diesem Fall, also wenn der Halbleiterschalter durchgeschaltet ist, wird die Spannung an dem Verbrauchernetz von der zumindest einen Brennstoffzellenanlage bestimmt, solange das Spannungspotential von Brennstoffzellen der Brennstoffzellenanlage größer ist als das Spannungspotential der zumindest einen Batterie. Das erfindungsgemäße Verfahren weist die bereits oben beschriebenen Vorteile auf.

Gemäß einer weiteren bevorzugten Ausführungsform arbeitet der zumindest eine DC-DC-Wandler als Tiefsetzsteller, wenn der Halbleiterschalter sperrt.

Wenn der Halbleiterschalter durchgeschaltet ist, kann der zumindest eine DC-DC-Wandler bei einem Energiefluss von der zumindest einen Brennstoffzellenanlage zu der zumindest einen Batterie vorzugsweise als Tiefsetzsteller arbeiten.

Wenn der Halbleiterschalter durchgeschaltet ist, kann der zumindest eine DC-DC-Wandler bei einem Energiefluss von der zumindest einen Batterie zu der zumindest einen Brennstoffzellenanlage vorzugsweise auch als Hochsetzsteller arbeiten.

Ein weiterer Vorteil ist, dass bei einem Ausfall des zumindest einen DC-DC-Wandlers ein Notbetrieb über Schalttransistoren durchgeführt wird, so dass ein unterbrechungsfreier Betrieb gewährleistet werden kann.

Die erfindungsgemäße Schaltungsanordnung und das erfindungsgemäße Verfahren bieten Lösungen, welche sich für Brennstoffzellenanlagen mit unterschiedlichsten Brennstoffquellen, wie z. B. Wasserstoffbereitstellung aus Metallhydridspeichern oder durch Reformierung, eignen. Die erfindungsgemäße Lösung ist weiterhin für unterschiedlichste Brennstoffzellentypen, wie beispielsweise PEM, HT-PEM, DMFC, MCFC, SOFC, PAFC, AFC, und für die beim Betrieb von Unterwasserfahrzeugen vorkommenden Batteriekonfigurationen, wie z. B. moderne, während des Betriebes konfigurierbare Batteriesysteme auf Li-Ionen-Basis, geeignet.

Die Erfindung ist nachfolgend anhand eines in der Zeichnung dargestellten Ausführungsbeispiels näher erläutert. Es zeigen:
- Fig. 1: eine schematische Darstellung einer Schaltungsanordnung gemäß einer Ausführungsform der Erfindung;
- Fig. 2: eine schematische Darstellung einer Schaltungsanordnung gemäß einer weiteren Ausführungsform der Erfindung;
- Fig. 3: eine schematische Darstellung einer Schaltungsanordnung;
- Fig. 4: eine schematische Darstellung der Anbindung einer Schaltungsanordnung gemäß einer Ausführungsform der Erfindung an eine Fahranlage eines Unterwasserfahrzeugs;
- Fig. 5: eine schematische Darstellung der Anbindung einer Schaltungsanordnung gemäß einer weiteren Ausführungsform der Erfindung an eine Fahranlage eines Unterwasserfahrzeugs;

Fig. 6 eine schematische Darstellung einer Schaltungsanordnung.

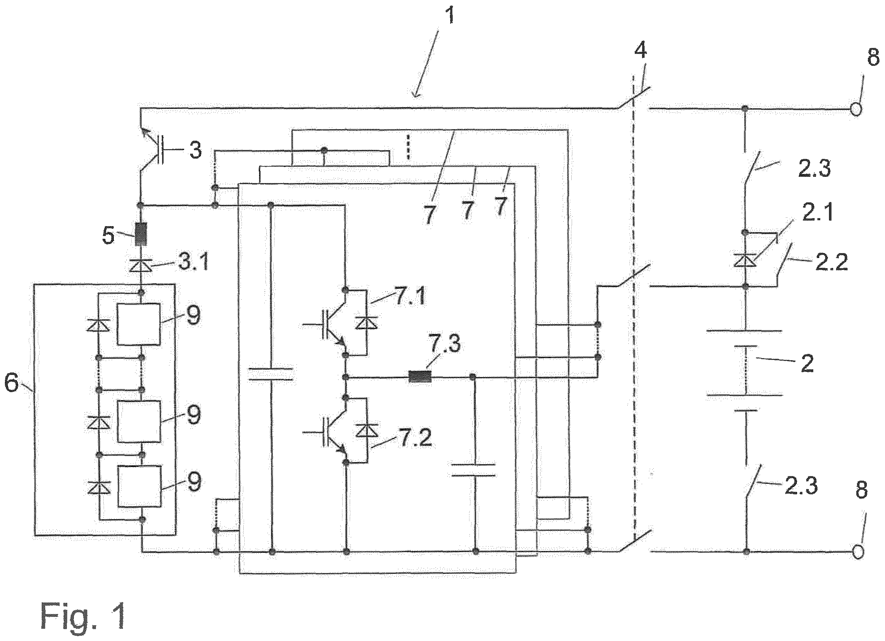

Fig. 1 ist eine schematische Darstellung einer Schaltungsanordnung 1 gemäß einer Ausführungsform der Erfindung. Bei der hier dargestellten Ausführungsform ist eine Pufferbatterie nicht erforderlich, da diese Aufgabe durch die Batterie 2 (Hauptbatterie) übernommen wird, die über eine Sperrdiode 2.1 mit Überbrückungsschalter 2.2 einerseits und über Batterieschalter 2.3 andererseits mit dem Fahrnetz gekoppelt ist. Ein Halbleiterschalter 3 und ein mechanischer Leistungsschalter 4 sind in der Schaltungsanordnung 1 zur Ankopplung an die Hauptfahrschiene bzw. das Fahrnetz 8 eines Unterwasserfahrzeugs vorgesehen. Weiterhin ist in der Schaltungsanordnung 1 eine Induktivität 5 zur Glättung des aus den Brennstoffzellen der Brennstoffzellenanlage 6 bzw. des Brennstoffzellenstrangs fließenden Stroms angeordnet. Eine Sperrdiode 3.1 zwischen Induktivität 5 und Hauptbatterie 6 verhindert Stromfluss in die Brennstoffzellenanlage 6 hinein. Der Halbleiterschalter 3 ermöglicht es, je nach Leistungsbedarf und Konfiguration der Batterie 2 die direkte Anbindung an das Fahrnetz 8 zu unterbrechen und wieder herzustellen.

Die Brennstoffzellenanlage 6 besteht aus mindestens einem oder mehreren in Reihe geschalteten Brennstoffzellenmodulen 9. Weiterhin sind in der hier dargestellten Ausführungsform einer Schaltungsanordnung 1 drei parallel zu den Brennstoffzellenmodulen 9 geschaltete bidirektionale DC-DC-Wandler 7 angeordnet, mittels welcher der Lastpunkt der Brennstoffzellenmodule 9 durch Pufferung aus der Batterie 2 beeinflusst werden kann bei gleichzeitig möglicher direkter und verlustarmer, über den Halbleiterschalter 3 realisierter Verschaltung zum Fahrnetz 8. Die DC-DC-Wandler 7 umfassen jeweils Halbleiterschalter für den Tiefsetzbetrieb mit Freilaufdiode 7.1 für den Hochsetzbetrieb und Halbleiterschalter für den Hochsetzbetrieb mit Freilaufdiode für den Tiefsetzbetrieb 7.2.

Des Weiteren ist eine Speicherinduktivität 7.3 notwendig.

Die DC-DC-Wandler 7 realisieren im Wesentlichen zwei Betriebsarten:
1. Der Halbleiterschalter 3 sperrt und die DC-DC-Wandler 7 haben eine Energieflussrichtung von der Brennstoffzellenanlage 6 über den Batterieanschlusses 2.3 in das Fahrnetz 8. Dabei arbeiten die DC-DC-Wandler als Tiefsetzsteller. Die Fahrnetzspannung wird ausschließlich von der Batterie 2 bestimmt. Zur Wirkungsgradoptimierung im Teillastbereich, beispielsweise zur Minimierung von Schaltverlusten, können lastabhängig einzelne DC-DC-Wandler abgeschaltet werden.
2. Der Halbleiterschalter 3 ist durchgeschaltet und die DC-DC-Wandler 7 arbeiten im Stützbetrieb in beiden Energieflussrichtungen.

Wenn die Energieflussrichtung von der Batterie 2 zu der Brennstoffzellenanlage 6 ist, dann wird der Strom der Brennstoffzellenanlage 6 ergänzt und die Spannung der Brennstoffzellenanlage 6 kann stabil gehalten werden. Dabei arbeiten die DC-DC-Wandler 7 als Hochsetzsteller.

Wenn die Energieflussrichtung in der umgekehrten Richtung von der Brennstoffzellenanlage 6 zu der Batterie 2 ist, dann wird die Brennstoffzellenanlage 6 stärker belastet, z. B. um überschüssigen Wasserstoff zu verwerten.

Die DC-DC-Wandler 7 arbeiten dabei als Tiefsetzsteller.

Die Fahrnetzspannung an den Klemmen zum Fahrnetz 8 wird von den Brennstoffzellen der Brennstoffzellenanlage 6 bestimmt, solange das Spannungspotential der Brennstoffzellen größer ist als das der Batterie 2 und der Halbleiterschalter durchgeschaltet ist.

In der hier gezeigten Konfiguration ist ein bidirektionale Synchronwandler implementiert, bei dem alle der in Reihe geschalteten Brennstoffzellenmodule 9 (hier drei Stück) der Brennstoffzellenanlage 6 gestützt werden und der aus einer Vielzahl (hier drei Stück) von parallel arbeitenden Synchronwandlern bzw. DC-DC-Wandlern 7. Durch diese Konfiguration ist eine Degradationsfähigkeit bei Ausfall einzelner Wandler 7 gegeben und im Teillastbereich sowie im Stützbetrieb können einzelne Wandler zur Wirkungsgradverbesserung weggeschaltet werden.

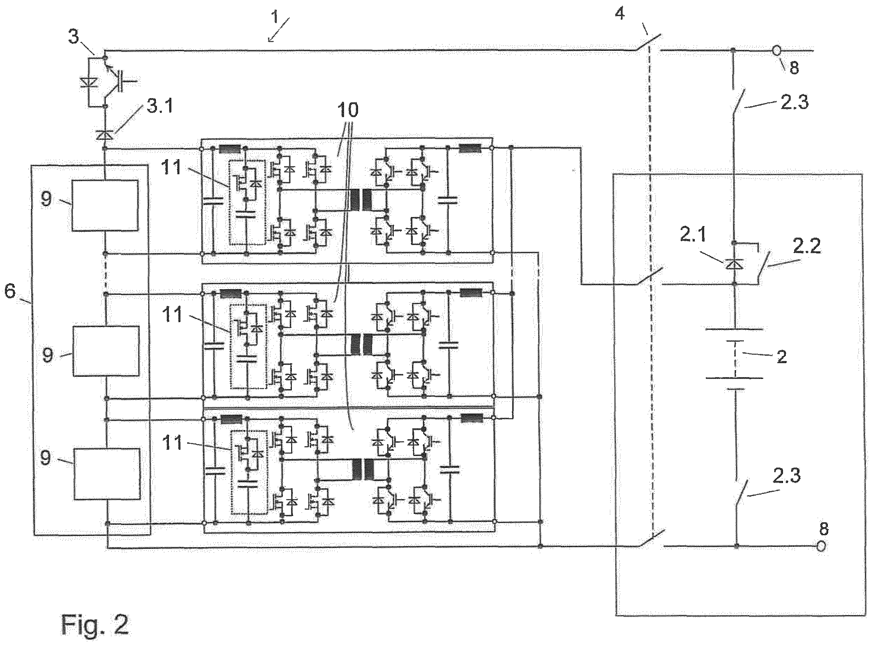

Die Ausgänge der einzelnen Synchronwandler 7 können in Gruppen parallel geschaltet sein, um einzelne Teilfahranlagen des Unterwasserfahrzeugs zu speisen. Bei Ausfall von Brennstoffzellenmodulen 9 kann es möglich sein, dass das Potential der in Reihe geschalteten Brennstoffzellenmodule 9 kleiner wird als das der Batterie 2. Eine Wirkungsweise als Hochsetzsteller mit Energieflussrichtung zur Batterie 2 ist jedoch mit der hier dargestellten Schaltungsanordnung 1 nicht möglich. Um dies zu vermeiden, ist die in Figur 2 dargestellte Ausführungsform hilfreich. Eine Kannlastbildung auf Ebene eines einzelnen Brennstoffzellenmoduls ist nicht möglich. Das am wenigsten belastbare Brennstoffzellenmodul gibt die Begrenzung der gesamten Brennstoffzellenanlage 6 vor.

Fig. 2 ist eine schematische Darstellung einer Schaltungsanordnung 1 mit einer Topologie gemäß einer weiteren Ausführungsform der Erfindung. Im Unterschied zu der in Fig. 1 dargestellten Ausführungsform ist hier jedem Brennstoffzellenmodul 9 ein eigener 2-Quadranten-Steller in Form von mehreren parallel geschalteten bidirektionalen Vollbrückenwandlern 10 zugeordnet, welcher den Energiefluss von den Brennstoffzellenmodulen 9 zu der Batterie 2 sicherstellt. Generell können neben dem Vollbrückenwandler alle anderen Wandlertopologien, die eine bidirektionale Stromübertragung ermöglichen, ohne dass es bedingt durch die Reihenschaltung der Wandlereingänge zu Kurzschlüssen kommt, wie das bei den meisten galvanisch nicht trennenden Topologien der Fall wäre, verwendet werden.

Um den Brennstoffzellenstrom übertragen zu können, kann jeder dieser Vollbrückenwandler 10 aus mehreren parallel geschalteten Einheiten bestehen. Zur Wirkungsgradoptimierung können in Abhängigkeit von der Last einzelne Einheiten zu- oder weggeschaltet werden. Die Stromübertragung in beide Richtungen wird durch eine Entlastungsschaltung 11 sichergestellt. In Fig. 2 ist die Entlastungsschaltung 11 in ihrer Ausführung angedeutet. Prinzipiell sind hier auch andere Schaltungsanordnungen denkbar. Bei Energieübertragung von den Brennstoffzellenmodulen 9 zu der Batterie 2 wird der Wandler 7 stromgespeist betrieben; hierbei ist die Entlastungsschaltung 11 aktiv. In der Gegenrichtung erfolgt der Betrieb dagegen spannungsgespeist. Wenn der Vollbrückenwandler 4, wie hier dargestellt, aus mehreren parallel geschalteten Einheiten gebildet ist, können im Teillastbereich und insbesondere im stützenden Betrieb einzelne Einheiten zwecks Wirkungsgradverbesserung weggeschaltet werden.

Bei Ausfall mehrerer Brennstoffzellenmodule 9 ergibt sich an der Reihenschaltung der Brennstoffzellenanlage 6 eine Spannung, die kleiner als die Spannung der Batterie 2 ist. Ein direkter Stromfluss über den Halbleiterschalter 3 zum Fahrnetz 8 ist nicht möglich. Durch Sperren des Halbleiterschalters 3 kann die Anlage weiterbetrieben werden. Es ist möglich, von einem einzigen Brennstoffzellenmodul 9 Energie in das Fahrnetz 8 zu übertragen.

Einschränkungen durch eine etwaige Begrenzung des Brennstoffzellenstroms können auf der Ebene der Brennstoffzellenmodule 9 ausgeregelt werden. Damit können die übrigen Brennstoffzellenmodule 9 ohne Einschränkung weiterbetrieben werden oder sogar die Minderleistung der aktuell eingeschränkten Brennstoffzellenmodule übernehmen, so dass idealerweise nach außen die volle geforderte Leistung zur Verfügung steht. Dies kann von einem Lastmanagement gesteuert werden.

Aufgrund der niedrigen Spannung eines einzelnen Brennstoffzellenmoduls 9 können auf der Brennstoffzellenseite der Vollbrückenwandler 10 Halbleiterschalter mit geringen Spannungsfestigkeiten und mit geringen Schaltverlusten, beispielsweise MOS-FETs verwendet werden. Damit können also die Schalt- und Durchlassverluste minimiert und der Wirkungsgrad erhöht werden.

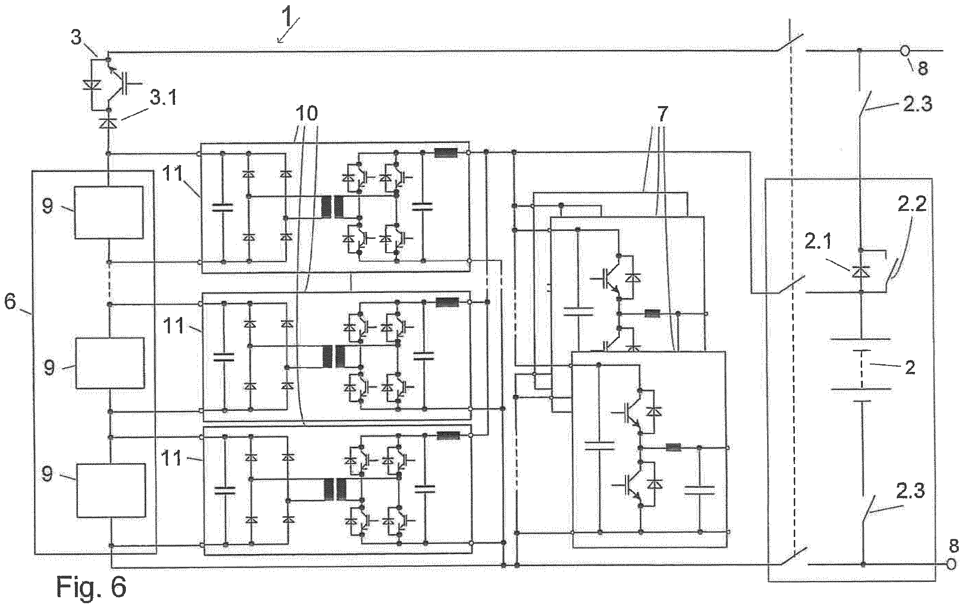

Prinzipiell sind auch Mischformen zwischen den in Figuren 1 und 2 dargestellten Ausführungsbeispielen realisierbar: Die Unterstützung der einzelnen Brennstoffzellenmodule 9 zur Realisierung einer individuellen Kannlastbildung und Verwendung eines DC-DC-Wandlers 7 zur Realisierung der Energieübertragung von den Brennstoffzellenmodulen 9 zu dem Fahrnetz 8, wie in Fig. 6 dargestellt.

Die Verwendung eines DC-DC-Wandlers 7 für die Energieübertragung vom Fahrnetz 8 zu den Brennstoffzellenmodulen 9 zur Unterstützung der Brennstoffzellenmodule 9 - hierbei ist nur eine globale Kannlastbildung möglich - und Verwendung einzelner DC-DC-Wandler 7 zur Realisierung der Energieübertragung von den Brennstoffzellenmodulen 9 zu dem Fahrnetz 8.

Welche der beiden Varianten, die in den Figuren 1 und 2 dargestellt sind (oder einer Mischform davon wie beispielsweise in Fig. 6 dargestellt) vorzugsweise anzuwenden ist, hängt dabei von der Ausgestaltung der gesamten Anlage und von den Anforderungen an die Verfügbarkeit ab.

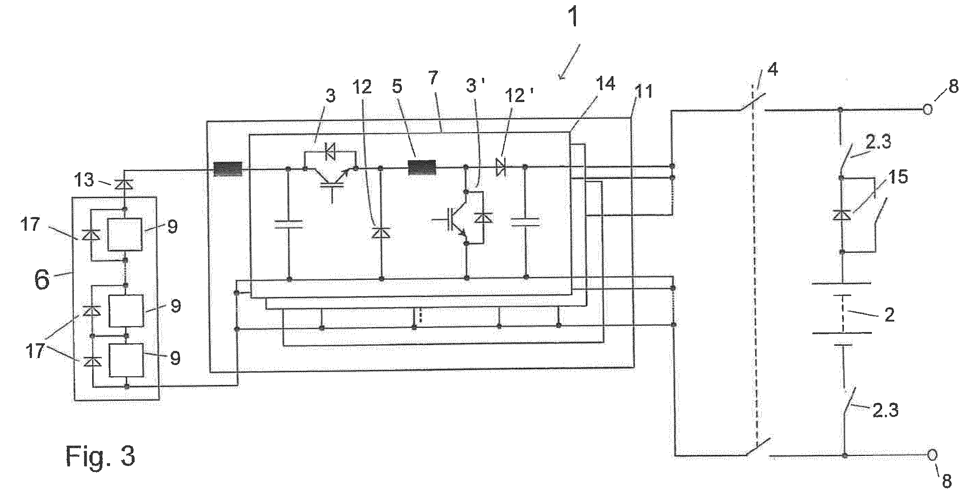

Fig. 3 ist eine schematische Darstellung einer weiteren möglichen Schaltungsanordnung 1.

Hier ist ein Halbleiterschalter 3, mit welchem die Brennstoffzellenmodule 9 direkt mit einer Sammelschiene verbunden werden, mit einer Freilaufdiode 12 und einer Induktivität 5 zu einem Einzel-Tiefsetzsteller erweitert. Einer oder mehrere dieser Einzel- Tiefsetzsteller sind parallel zu einem temporären Tiefsetzsteller zusammengeschaltet.

Die Spannung der in Reihe geschalteten Brennstoffzellenmodule 9 muss dabei größer sein als die Spannung der Batterie 2. Um bei Ausfall einzelner Brennstoffzellenmodule 9 degradationsfähig zu sein, kann der aus dem Halbleiterschalter 3, der Freilaufdiode 12 und dem induktiven Energiespeicher 5 bestehende Tiefsetzsteller um einen weiteren Halbleiterschalter 3' und die Diode 12' um eine Hochsetzstellerfunktion erweitert werden. Eine Sperrdiode 13 kann zur Verbesserung des Wirkungsgrades auch entfallen, da die Brennstoffzellenmodule 9 bereits durch die Freilaufdiode 12' vor Rückströmen aus dem Fahrnetz 8 geschützt sind. Über den Trennschalter 4 und den temporären Tiefsetzsteller ist die Brennstoffzelle mit dem Fahrnetz 8 verbunden.

Bei dem temporären Tiefsetzsteller 14 kann die Belastung der Brennstoffzellen der Brennstoffzellenanlage 6 variiert werden. Im Beharrungszustand sind der Halbleiterschalter 3 im Tiefsetzbetrieb und die Freilaufdiode 12' durchgeschaltet, so dass im Wesentlichen nur deren Durchlassverluste relevant sind. Die Spannung auf dem Fahrnetz 8 wird von der Spannung bzw. Lastkennlinie der Brennstoffzellenmodule 9 vorgegeben. Sobald die an der Sammelschiene des Fahrnetzes 8 geforderte elektrische Leistung nicht durch die Brennstoffzellenmodule 9 abgedeckt werden kann, wird die Leistung durch Takten der Tiefsetztransistoren bzw. des Halbleiterschalters 3 im Tiefsetzbetrieb begrenzt oder reduziert. Die Spannung an der Sammelschiene des Fahrnetzes 8 wird durch die Batterie 2 vorgegeben, so dass die Batteriediode 15 durchschaltet und ein Batteriestrom fließt, damit die an der Sammelschiene des Fahrnetzes 8 geforderte Leistung in der Summe von der Brennstoffzellenanlage 6 und der Batterie 2 abgedeckt werden kann. Die Wasserstoffversorgung der Brennstoffzellenmodule 9 kann sowohl direkt, z. B. aus Metallhydridspeichern, oder von einem Reformer erzeugt werden. Bei der Verwendung des temporären Tiefsetzstellers sollte dabei möglichst wenig begrenzend eingegriffen werden. Das bedeutet, dass in der überwiegenden Betriebszeit die Füllung der Reformeranlage die Stellgröße für den Reformerausgangsdruck ist.

Typischerweise werden die Brennstoffzellenanlagen 6 für Unterwasserfahrzeuge bzw. Unterseeboote im Teillastbetrieb betrieben. Lastschwankungen auf dem Netz sind eher gering. Zur Minimierung des verlustreicheren taktenden Betriebes des temporären Tiefsetzstellers kann der Wasserstoffdruck dann angehoben werden. Damit ist eine Druckreserve vorhanden, die kleinere Lastschwankungen ausgleichen kann. Durch den Teillastbetrieb ist der Wirkungsgrad der Gasreinigungsmembran kaum vermindert.

Bei Ausfall einzelner Brennstoffzellenmodule 9 wird der als Transistor wirkende Halbleiterschalter 3 im Hochsetzbetrieb getaktet, der damit zusammen mit der Freilaufdiode 12' und der Induktivität 5 ein Hochsetzsteller bildet. Damit ist die Brennstoffzellenanlage 6 degradationsfähig. Die Spannung an der Sammelschiene des Fahrnetzes 8 entspricht der Spannung der Batterie 2. In dieser Betriebsart wird der Diodenüberbrückungschalter 16 geschlossen.

Insbesondere bei Fahranlagen, deren Leistungsbedarf zu einem sehr großen Teil oder nahezu komplett aus der Brennstoffzellenanlage 6 gespeist wird, ist diese Anordnung von Vorteil: Derartige Anlagen bestehen aus einer großen Anzahl parallel geschalteter Brennstoffzellenmodulstränge. Ein großer Teil der Lastschwankungen im Teillastbetrieb können ohne taktendes Eingreifen ausgeglichen werden. Die Degradationsfähigkeit kann durch die große Anzahl parallel geschalteter Brennstoffzellenstränge bzw. Brennstoffzellenanlagen 6 erreicht werden. Bei derartigen Anlagen kann der Hochsetzsteller-Anteil bestehend aus dem Transistor (Halbleiterschalter 3') und der Freilaufdiode 12' entfallen, da die Degradationsfähigkeit durch die Vielzahl der Stränge sichergestellt ist. Die Rückstromdiode bzw. Sperrdiode 13 sollte bei Verwendung diesbezüglich empfindlicher Brennstoffzellenmodule 9 beibehalten werden. Die Bypassdioden 17 können ebenfalls entfallen, da im Fehlerfall der gesamte Strang durch den Tiefsetztransistor (Halbleiterschalter 3) entkoppelt wird.

Durch die oben beschriebenen Ausführungsformen wird eine direkte Anbindung an das Fahrnetz 8 ohne DC-DC-Wandlerverluste sondern lediglich mit geringfügigen Durchlassverlusten an den Halbleiterschaltern erzielt. Die Belastung der Brennstoffzellenmodule 9 ist unabhängig von den Verhältnissen auf dem Fahrnetz 8. Ein Reformerbetrieb ist möglich, eine Kannlastbildung ist möglich und eine schonende Betriebsweise der Brennstoffzellenmodule 9 wird erreicht. Das Lastmanagement, welches bei Einschränkung/Minderleistung einzelner Brennstoffzellenmodule 9 die Minderleistung auf die übrigen Brennstoffzellenmodule 9 verteilt und die gesamte Anlage im Teillastbereich weiterhin die geforderte Gesamtleistung erbringt, wird ermöglicht.

Weiterhin ist eine hohe Verfügbarkeit bei Ausfall mehrerer Brennstoffzellenmodule 9 auch wenn das Potential der Brennstoffzellenmodule 9 geringer ist als das der Batterie 2 vorhanden.

In diesem Fall wird die gesamte Leistung der Brennstoffzellenmodule 9 über den DC-DC-Wandler 7 übertragen. Außerdem ist ein wirkungsgradoptimierter Betrieb durch Wegschalten von einzelnen DC-DC-Wandlern 7 möglich.

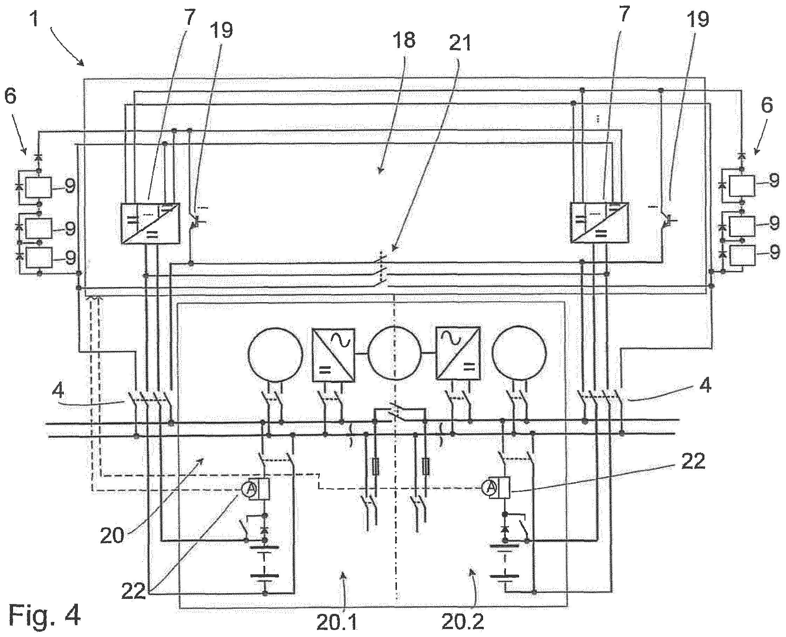

Fig. 4 ist eine schematische Darstellung der Anbindung einer Schaltungsanordnung 1 gemäß einer Ausführungsform der Erfindung an eine Fahranlage eines Unterwasserfahrzeugs. Hier können die Brennstoffzellenmodule 9 mittels der Brennstoffzellenanbindung 18 direkt über Schalttransistoren 19 oder indirekt über die DC-DC-Wandler 7 an eine Fahranlage 20 mit umrichtergespeistem Propellermotor eines Unterwasserfahrzeugs angebunden werden.

Zur Ermöglichung des unterbrechungsfreien Betriebs wird jeder Teilfahranlage 20.1, 20.2 ein eigener Ausgang des DC-DC-Wandlers 7 zugeordnet. Die DC-DC-Wandler 7 bzw. Wandlergruppen können auch als räumlich getrennte DC-DC-Wandler ausgeführt werden. An den Eingängen der DC-DC-Wandler 7 werden die Brennstoffzellenmodule 9 so verschaltet, dass mit allen Brennstoffzellenmodulen 9 alle Teilfahranlagen 20.1, 20.2 versorgt werden können. Bei Ausfall einer Teilfahranlage, z. B. der Teilfahranlage 20.1 bei Sammelschienenkurzschluss, kann nach Öffnen des der vom Kurzschluss betroffenen Teilfahranlage 20.1 zugehörigen Brennstoffzellen-Leistungsschalters 4 und anschließendem Schließen eines Notkuppelschalters 21 die komplette Nennleistung der Brennstoffzellenmodule 9 genutzt werden, ohne dass die DC-DC-Wandler 7 und die Schalttransistoren 19 überdimensioniert werden müssen. Der Notkuppelschalter 21 kann als Trenner ausgeführt werden. Die Brennstoffzellen-Leistungsschalter 4 können als Leistungsschalter mit Schutzfunktion ausgeführt werden oder als Trenner, bei denen eine zusätzliche Sicherung (hier nicht dargestellt) den Schutz der Leitungen auf der Seite der Brennstoffzellenmodule 9 sowie der Brennstoffzellen-Anbindung 18 bei aus dem Fahrnetz 8 gespeisten Kurzschlüssen übernimmt.

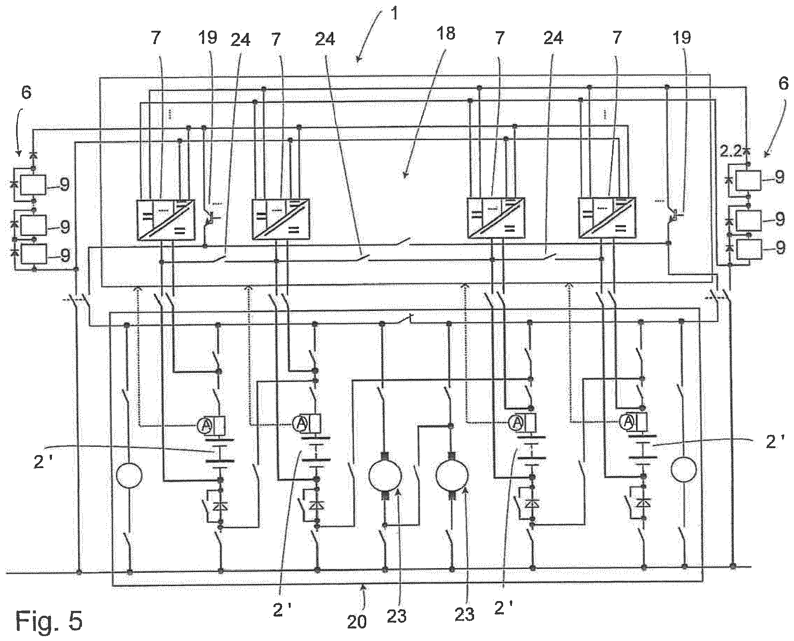

Unmittelbar nach dem Ausfall einer Teilfahranlage, z. B. der Teilfahranlage 20.1, kann dann zunächst maximal die Hälfte der gesamten Brennstoffzellennennleistung übertragen werden. Erst nach Trennen des Brennstoffzellen-Leistungsschalters 4 des fehlerbehafteten Anlagenteils 20.1 und Schließen des Notkuppelschalters 21 kann wieder die gesamte Nennleistung übertragen werden. Bei Ausfall eines DC-DC-Wandlers 7 bzw. einer DC-DC-Wandlergruppe 7 oder eines Schalttransistors 19 bzw. einer Schalttransistorengruppe 19 kann die Last auf beide Brennstoffzellenanlagen 6 symmetrisch aufgeteilt werden. Damit ist auch bei Ausfall einer DC-DC-Wandlergruppe 7 oder einer Schalttransistorengruppe 19 ein wirkungsgradoptimierter Teillastbetrieb der Brennstoffzellenanlagen 6 möglich. Weiterhin sind aus dem Stand der Technik bekannte Strommesseinrichtungen 22 vorgesehen, welche diversen Regelungszwecken dienen. Fig. 5 ist eine schematische Darstellung der Anbindung einer Schaltungsanordnung 1 gemäß einer weiteren Ausführungsform der Erfindung zur Brennstoffzellenanbindung an eine aus dem Stand der Technik bekannte Fahranlage 20 mit Gleichstrom- Propellermotor und Fahrstufenschaltung eines Unterwasserfahrzeugs.

Wie hier dargestellt ist, erfolgt die grobe Einstellung der Drehzahl des Propellermotors durch die Kombination einer Reihen- und Parallelschaltung mehrerer Teilbatterien 2' und mehrerer Teilmotoren 23. Bisher konnte Energie nur aus den Brennstoffzellen der Brennstoffzellenanlage 6, bei Parallelschaltung der Teilbatterien 2', also in den niedrigen Fahrstufen, eingespeist werden. Das hier dargestellte Ausführungsbeispiel ermöglicht es jedoch auch in hohen Fahrstufen, bei denen die Teilbatterien 2' in Reihe geschaltet sind, Energie aus der Brennstoffzellenanlage 6 in das Fahrnetz 8 zu speisen. Damit ist ein kontinuierlicher Betrieb möglich, was insbesondere den Betrieb mit einem Reformer erleichtert.

Bei der Brennstoffzellen-Anbindung 18 sind entsprechend der Anzahl an Teilbatterien 2' DC-DC-Wandlergruppen 7 vorgesehen, von denen jede eine Teilbatterie 2' speist. Zur Vermeidung von Kurzschlüssen bei Reihenschaltung der Teilbatterien 2' müssen galvanisch trennende Topologien verwenden werden, wie beispielsweise in dem in Fig. 2 dargestellten Ausführungsbeispiel. Die direkt angebundene Betriebsweise über die Schalttransistoren 19 ist bei Reihenschaltung der Teilbatterien 2' nicht möglich.

Die Energie aus den Brennstoffzellenmodulen 9 muss in dieser Konstellation indirekt über die DC-DC-Wandler 7 übertragen werden. Bei Ausfall einer Teilfahranlage können über Trenner 24 die DC-DC-Wandler 7 unabhängig voneinander auf weitere verfügbare Teilbatterien 2' geschaltet werden. Unmittelbar nach Ausfall einer Teilfahranlage kann zunächst nur maximal die halbe Brennstoffzellenleistung übertragen werden. Erst nach Synchronisieren der DC-DC-Wandler 7 und anschließendem Zuschalten der Trenner 24 kann die gesamte Brennstoffzellenleistung wieder übertragen werden.

### Bezugszeichenliste

- 1: Schaltungsanordnung
- 2: Batterie
- 2': Teilbatterie
- 2.1: Sperrdiode (Batterie)
- 2.2: Überbrückungsschalter
- 2.3: Batterieschalter
- 3,3': Halbleiterschalter
- 3.1: Sperrdiode (Brennstoffzelle)
- 4: mechanischer Leistungsschalter
- 5: Induktivität
- 6: Brennstoffzellenanlage
- 7: DC-DC-Wandler / DC-DC-Wandlergruppe
- 7.3: Induktivität
- 8: Fahrnetz
- 9: Brennstoffzellenmodul
- 10: Vollbrückenwandler
- 11: Entlastungsschaltung
- 12, 12': Freilaufdiode
- 13: Sperrdiode (Brennstoffzelle)
- 14: temporärer Tiefsetzsteller
- 15: Sperrdiode (Batterie)
- 16: Diodenüberbrückungsschalter
- 17: Bypassdiode (Brennstoffzellen)
- 18: Brennstoffzellen-Anbindung
- 19: Schalttransistor
- 20: Fahranlage
- 20.1, 20.2: Teilfahranlage
- 21: Notkuppelschalter
- 22: Strommesseinrichtung
- 23: Teilmotor
- 24: Trenner

## Patentansprüche

1. Schaltungsanordnung (1) zur elektrischen Anbindung zumindest einer Brennstoffzellenanlage (6) und zumindest einer wiederaufladbaren Batterie (2) an ein Verbrauchernetz, insbesondere ein Fahrnetz (8) eines Unterwasserfahrzeugs mit einer außenluftunabhängigen Antriebs- und Energieversorgung, wobei zumindest ein DC-DC-Wandler (7) vorgesehen ist, welcher mit der Brennstoffzellenanlage (6) einerseits und der zumindest einen Batterie (2) andererseits verbunden ist, und der zumindest eine DC-DC-Wandler (7) dazu ausgelegt ist, in zwei Richtungen wirken zu können, wobei der zumindest eine DC-DC-Wandler (7) in der einen Richtung als Tiefsetzsteller wirken kann, um Energie von der Brennstoffzellenanlage (6) in das Verbrauchernetz (8) zu transferieren und wobei die Brennstoffzellenanlage (6) über einen Halbleiterschalter (3, 3') direkt mit dem Verbrauchernetz (8) verschaltet ist, **dadurch gekennzeichnet, dass**, wenn der Halbleiterschalter (3, 3') sperrt, Energie von der Brennstoffzellenanlage (6) über den DC-DC-Wandler (7) zu dem Verbrauchernetz (8) transferiert wird und die Verbrauchernetzspannung von der Batterie (2) bestimmt wird.

2. Schaltungsanordnung (1) nach Anspruch 1, **dadurch gekennzeichnet, dass** die Brennstoffzellenanlage (6) und die zumindest eine wiederaufladbare Batterie (2) direkt an ein Verbrauchernetz anschließbar sind.

3. Schaltungsanordnung (1) nach einem der vorangegangenen Ansprüche, **dadurch gekennzeichnet, dass** die Brennstoffzellenanlage (6) über ein erstes Schaltmittel und die zumindest eine wiederaufladbare Batterie (2) über ein zweites Schaltmittel direkt an ein Verbrauchernetz anschließbar sind.

4. Schaltungsanordnung (1) nach einem der vorangegangenen Ansprüche, **dadurch gekennzeichnet, dass** der zumindest eine DC-DC-Wandler (7) ausgelegt ist, in der anderen Richtung als Hochsetzsteller zu wirken, so dass Energie von der Batterie (2) in Richtung Brennstoffzellenanlage (6) transferiert werden kann.

5. Schaltungsanordnung (1) nach einem der vorangegangenen Ansprüche, **dadurch gekennzeichnet, dass** Schaltmittel vorgesehen sind, die so wirken, dass Energie von der Brennstoffzellenanlage (6) in die zumindest eine Batterie (2) zum Aufladen transferiert werden kann.

6. Schaltungsanordnung (1) nach einem der vorangegangenen Ansprüche, **dadurch gekennzeichnet, dass** eine Anzahl von parallel geschalteten DC-DC-Wandlern (7) vorgesehen ist, welche einzeln zu- und abschaltbar sind.

7. Verfahren zum Betreiben einer außenluftunabhängigen Antriebs- und Energieversorgung eines Unterwasserfahrzeugs, welche durch einen Stromkreislauf mit zumindest einer wiederaufladbaren Batterie (2) und zumindest eine Brennstoffzellenanlage (6) versorgt wird, wobei in dem Stromkreislauf zumindest ein bidirektionaler DC-DC-Wandler (7) vorgesehen ist, welcher mit der Brennstoffzellenanlage (6) einerseits und der zumindest einen Batterie (2) andererseits verbindbar ist, und zumindest ein Halbleiterschalter (3, 3') zum Unterbrechen der direkten Einspeisung durch die zumindest eine Brennstoffzellenanlage (6) in das Verbrauchernetz, **dadurch gekennzeichnet, dass**, wenn der Halbleiterschalter (3, 3') sperrt, ein Energiefluss durch den zumindest einen DC-DC-Wandler (7) von der zumindest einen Brennstoffzellenanlage (6) zu einem durch die Antriebs- und Energieversorgung versorgten Verbrauchernetz, insbesondere zu einem Fahrnetz (8), erfolgt, wobei die Verbrauchernetzspannung von der zumindest einen Batterie (2) bestimmt wird, und wenn der Halbleiterschalter (3, 3') durchgeschaltet ist, ein Energiefluss durch den zumindest einen DC-DC-Wandler (7) von der zumindest einen Brennstoffzellenanlage (6) zu der zumindest einen Batterie (2) und von der zumindest einen Batterie (2) zu der zumindest einen Brennstoffzellenanlage (6) erfolgt, wobei die Spannung an dem Verbrauchernetz von der zumindest einen Brennstoffzellenanlage (6) bestimmt wird, solange das Spannungspotential von Brennstoffzellen der Brennstoffzellenanlage (6) größer ist als das Spannungspotential der zumindest einen Batterie (2).

8. Verfahren nach Anspruch 7, **dadurch gekennzeichnet, dass** die Brennstoffzellenanlage (6) oder die zumindest eine wiederaufladbare Batterie (2) oder sowohl die Brennstoffzellenanlage (6) als auch die zumindest eine wiederaufladbare Batterie (2) direkt an ein Verbrauchernetz angeschlossen wird.

9. Verfahren nach einem der Ansprüche 7 oder 8, **dadurch gekennzeichnet, dass** ein Energiefluss in Abhängigkeit des Auslastungszustandes der Brennstoffzelle durch den zumindest einen DC-DC-Wandler geleitet wird.

10. Verfahren nach Anspruch 9, **dadurch gekennzeichnet, dass** ein Energiefluss durch den zumindest einen DC-DC-Wandler von der zumindest einen Brennstoffzellenanlage zu der zumindest einen Batterie geleitet wird, sofern die verfügbare Leistung der mindestens einen Brennstoffzellenanlage größer als die vom Verbrauchernetz abgeforderte Leistung ist.

11. Verfahren nach Anspruch 9, **dadurch gekennzeichnet, dass** ein Energiefluss durch den zumindest einen DC-DC-Wandler von der zumindest einen Batterie zu der zumindest einen Brennstoffzellenanlage geleitet wird, sofern die verfügbare Leistung der mindestens einen Brennstoffzellenanlage kleiner als die vom Verbrauchernetz abgeforderte Leistung ist.

12. Verfahren nach einem der Ansprüche 7 bis 11, **dadurch gekennzeichnet, dass** wenn der Halbleiterschalter (3, 3') sperrt, der zumindest eine DC-DC-Wandler (7) als Tiefsetzsteller arbeitet.

13. Verfahren nach einem der Ansprüche 7 bis 12, **dadurch gekennzeichnet, dass** wenn der Halbleiterschalter (3, 3') durchgeschaltet ist, bei einem Energiefluss von der zumindest einen Brennstoffzellenanlage (6) zu der zumindest einen Batterie (2) der zumindest eine DC-DC-Wandler (7) als Tiefsetzsteller arbeitet.

14. Verfahren nach einem der Ansprüche 7 bis 13, **dadurch gekennzeichnet, dass** wenn der Halbleiterschalter (3, 3') durchgeschaltet ist, bei einem Energiefluss von der zumindest einen Batterie (2) zu der zumindest einen Brennstoffzellenanlage (6) der zumindest eine DC-DC-Wandler (7) als Hochsetzsteller arbeitet.

## Claims

1. Circuit arrangement (1) for electrically connecting at least one fuel cell installation (6) and at least one rechargeable battery (2) to a load network, particularly a propulsion network (8) of an underwater vehicle having an outside-air-independent drive and power supply, wherein at least one DC-DC converter (7) is provided that is connected firstly to the fuel cell installation (6) and secondly to the at least one battery (2), and the at least one DC-DC converter (7) is designed to be able to act in two directions, wherein the at least one DC-DC converter (7) can act as a step-down converter in one direction, in order to transfer energy from the fuel cell installation (6) to the load network (8), and wherein the fuel cell installation (6) is connected via a semiconductor switch (3, 3') directly to the load network (8), **characterized in that** if the semiconductor switch (3, 3') is off, energy is transferred from the fuel cell installation (6) via the DC-DC converter (7) to the load network (8) and the load network voltage is determined by the battery (2).

2. Circuit arrangement (1) according to Claim 1, **characterized in that** the fuel cell installation (6) and the at least one rechargeable battery (2) are connectable directly to a load network.

3. Circuit arrangement (1) according to either of the preceding claims, **characterized in that** the fuel cell installation (6) is connectable via a first switching means, and the at least one rechargeable battery (2) is connectable via a second switching means, directly to a load network.

4. Circuit arrangement (1) according to one of the preceding claims, **characterized in that** the at least one DC-DC converter (7) is designed to act as a step-up converter in the other direction, so that energy can be transferred from the battery (2) in the direction of the fuel cell installation (6).

5. Circuit arrangement (1) according to one of the preceding claims, **characterized in that** switching means are provided that act such that energy can be transferred from the fuel cell installation (6) to the at least one battery (2) for charging purposes.

6. Circuit arrangement (1) according to one of the preceding claims, **characterized in that** a number of DC-DC converters (7) connected in parallel are provided that are individually connectable and diconnectable.

7. Method for operating an outside-air-independent drive and power supply for an underwater vehicle, which drive and power supply is supplied with power by a circuit having at least one rechargeable battery (2) and by at least one fuel cell installation (6), wherein the circuit contains at least one bidirectional DC-DC converter (7), which is connectable firstly to the fuel cell installation (6) and secondly to the at least one battery (2), and at least one semiconductor switch (3, 3') for interrupting the direct supply by the at least one fuel cell installation (6) to the load network, **characterized in that** when the semiconductor switch (3, 3') is off, there is a flow of energy through the at least one DC-DC converter (7) from the at least one fuel cell installation (6) to a load network supplied with power by the drive and power supply, particularly to a propulsion network (8), wherein the load network voltage is determined by the at least one battery (2), and when the semiconductor switch (3, 3') is on, there is a flow of energy through the at least one DC-DC converter (7) from the at least one fuel cell installation (6) to the at least one battery (2) and from the at least one battery (2) to the at least one fuel cell installation (6), wherein the voltage across the load network is determined by the at least one fuel cell installation (6) so long as the voltage potential from fuel cells of the fuel cell installation (6) is greater than the voltage potential of the at least one battery (2).

8. Method according to Claim 7, **characterized in that** the fuel cell installation (6) or the at least one rechargeable battery (2) or both the fuel cell installation (6) and the at least one rechargeable battery (2) is/are connected directly to a load network.

9. Method according to either of Claims 7 and 8, **characterized in that** a flow of energy is routed through the at least one DC-DC converter on the basis of the utilization state of the fuel cell.

10. Method according to Claim 9, **characterized in that** a flow of energy is routed through the at least one DC-DC converter from the at least one fuel cell installation to the at least one battery provided that the available power of the at least one fuel cell installation is greater than the power demanded by the load network.

11. Method according to Claim 9, **characterized in that** a flow of energy is routed through the at least one DC-DC converter from the at least one battery to the at least one fuel cell installation provided that the available power of the at least one fuel cell installation is less than the power demanded by the load network.

12. Method according to one of Claims 7 to 11, **characterized in that** when the semiconductor switch (3, 3') is off, the at least one DC-DC converter (7) operates as a step-down converter.

13. Method according to one of Claims 7 to 12, **characterized in that** when the semiconductor switch (3, 3') is on, a flow of energy from the at least one fuel cell installation (6) to the at least one battery (2) prompts the at least one DC/DC converter (7) to operate as a step-down converter.

14. Method according to one of Claims 7 to 13, **characterized in that** when the semiconductor switch (3, 3') is on, a flow of energy from the at least one battery (2) to the at least one fuel cell installation (6) prompts the at least one DC-DC converter (7) to operate as a step-up converter.

## Revendications

1. Arrangement de circuit (1) destiné à la connexion électrique d'au moins un système de pile à combustible (6) et d'au moins une batterie rechargeable (2) à un réseau de récepteurs, notamment un réseau de propulsion (8) d'un véhicule sous-marin comprenant une alimentation motrice et en énergie indépendante de l'air extérieur, au moins un convertisseur CC/CC (7) étant présent, lequel est relié d'un côté au système de pile à combustible (6) et de l'autre côté à l'au moins une batterie (2), et l'au moins un convertisseur CC/CC (7) étant conçu pour pouvoir agir dans deux directions, l'au moins un convertisseur CC/CC (7) pouvant agir comme un abaisseur de tension dans l'une des directions afin de transférer de l'énergie du système de pile à combustible (6) dans le réseau de récepteurs (8) et le système de pile à combustible (6) étant interconnecté directement au réseau de récepteurs (8) par le biais d'un commutateur semiconducteur (3, 3'),
**caractérisé en ce que** lorsque le commutateur semiconducteur (3, 3') est bloqué, de l'énergie est transférée du système de pile à combustible (6) au réseau de récepteurs (8) par le biais du convertisseur CC/CC (7) et la tension du réseau de récepteurs est définie par la batterie (2).

2. Arrangement de circuit (1) selon la revendication 1, **caractérisé en ce que** le système de pile à combustible (6) et l'au moins une batterie rechargeable (2) peuvent être raccordés directement au réseau de récepteurs.

3. Arrangement de circuit (1) selon l'une des revendications précédentes, **caractérisé en ce que** le système de pile à combustible (6) peut être raccordé directement à un réseau de récepteurs par le biais d'un premier moyen de commutation et l'au moins une batterie rechargeable (2) par le biais d'un deuxième moyen de commutation.

4. Arrangement de circuit (1) selon l'une des revendications précédentes, **caractérisé en ce que** l'au moins un convertisseur CC/CC (7) est conçu pour agir dans l'autre direction en tant qu'élévateur de tension, de sorte que de l'énergie peut être transférée de la batterie (2) en direction du système de pile à combustible (6).

5. Arrangement de circuit (1) selon l'une des revendications précédentes, **caractérisé en ce que** des moyens de commutation sont présents, lesquels agissent de telle sorte que de l'énergie peut être transférée du système de pile à combustible (6) dans l'au moins une batterie (2) pour la recharger.

6. Arrangement de circuit (1) selon l'une des revendications précédentes, **caractérisé en ce qu'**une pluralité de convertisseurs CC/CC (7) branchés en parallèle sont présents, lesquels peuvent être mis en circuit et hors circuit individuellement.

7. Procédé pour faire fonctionner une alimentation motrice et en énergie indépendante de l'air extérieur d'un véhicule sous-marin, laquelle est alimentée par un circuit électrique comprenant au moins une batterie rechargeable (2) et par au moins un système de pile à combustible (6), au moins un convertisseur CC/CC (7) bidirectionnel étant présent dans le circuit électrique, lequel peut être relié d'un côté au système de pile à combustible (6) et de l'autre côté à l'au moins une batterie (2), et au moins un commutateur semiconducteur (3, 3') destiné à interrompre l'injection directe par l'au moins un système de pile à combustible (6) dans le réseau de récepteurs, **caractérisé en ce que** lorsque le commutateur semiconducteur (3, 3') est bloqué, un flux d'énergie s'effectue à travers l'au moins un convertisseur CC/CC (7) depuis l'au moins un système de pile à combustible (6) vers un réseau de récepteurs alimenté par l'alimentation motrice et en énergie, notamment vers un réseau de propulsion (8), la tension du réseau de récepteurs étant définie par l'au moins une batterie (2), et lorsque le commutateur semiconducteur (3, 3') est passant, un flux d'énergie s'effectue à travers l'au moins un convertisseur CC/CC (7) depuis l'au moins un système de pile à combustible (6) vers l'au moins une batterie (2) et depuis l'au moins une batterie (2) vers l'au moins un système de pile à combustible (6), la tension au niveau du réseau de récepteurs étant définie par l'au moins un système de pile à combustible (6) tant que le potentiel de tension des piles à combustible du système de pile à combustible (6) est supérieur au potentiel de tension de l'au moins une batterie (2).

8. Procédé selon la revendication 7, **caractérisé en ce que** le système de pile à combustible (6) ou l'au moins une batterie rechargeable (2) ou à la fois le système de pile à combustible (6) et aussi l'au moins une batterie rechargeable (2) sont raccordés directement à un réseau de récepteurs.

9. Procédé selon l'une des revendications 7 ou 8, **caractérisé en ce qu'**un flux d'énergie est conduit à travers l'au moins un convertisseur CC/CC en fonction de l'état de charge de la pile à combustible.

10. Procédé selon la revendication 9, **caractérisé en ce qu'**un flux d'énergie est conduit à travers l'au moins un convertisseur CC/CC depuis l'au moins un système de pile à combustible vers l'au moins une batterie sous réserve que la puissance disponible de l'au moins un système de pile à combustible soit supérieure à la puissance demandée par le réseau de récepteurs.

11. Procédé selon la revendication 9, **caractérisé en ce qu'**un flux d'énergie est conduit à travers l'au moins un convertisseur CC/CC depuis l'au moins une batterie vers l'au moins un système de pile à combustible sous réserve que la puissance disponible de l'au moins un système de pile à combustible soit inférieure à la puissance demandée par le réseau de récepteurs.

12. Procédé selon l'une des revendications 7 à 11, **caractérisé en ce que** lorsque le commutateur semiconducteur (3, 3') est bloqué, l'au moins un convertisseur CC/CC (7) fonctionne comme un abaisseur de tension.

13. Procédé selon l'une des revendications 7 à 12, **caractérisé en ce que** lorsque le commutateur semiconducteur (3, 3') est passant, l'au moins un convertisseur CC/CC (7) fonctionne comme un abaisseur de tension lors d'un flux d'énergie depuis l'au moins un système de pile à combustible (6) vers l'au moins une batterie (2).

14. Procédé selon l'une des revendications 7 à 13, **caractérisé en ce que** lorsque le commutateur semiconducteur (3, 3') est passant, l'au moins un convertisseur CC/CC (7) fonctionne comme un élévateur de tension lors d'un flux d'énergie depuis l'au moins une batterie (2) vers l'au moins un système de pile à combustible (6).
